# EUROPEAN PATENT APPLICATION

(11) **EP 2 671 701 A2**
(43) Date of publication of application: **11.12.2013**
(21) Application number: 13170839.8
(22) Date of filing: 06.06.2013
(51) Int. Cl.: B29C 33/30, B29C 33/50, B29L 31/08

(54) **Arrangement and method for manufacturing a wind turbine blade**

(30) Priority: 07.06.2012 US 201213490728
(71) Applicant: Siemens Aktiengesellschaft, 80333 München (DE)
(72) Inventor: Obrecht, John M., Louisville, 80027 (US)

(57) **Abstract**

A closed mold arrangement for manufacturing a wind turbine blade, including: a closed outer mold (10); a mechanism (44) to selectively flex the outer mold (10) across a range of outer geometries; and a first inner mold (92, 120). The first inner mold (92, 102, 120, 140) is used in the closed outer mold (10) when the closed outer mold (10) is in a first outer geometry and thereby defines a first blade geometry. Alternatively a second inner mold (102, 140) is used in the closed outer mold (10) when the closed outer mold (10) is flexed to a second outer geometry different than the first outer geometry and thereby defines a second blade geometry.

## Description

### FIELD OF THE INVENTION

The invention relates generally to the manufacturing of wind turbine blades. In particular, the invention relates to a closed molding process to make blades with differing geometries using a single outer mold.

### BACKGROUND OF THE INVENTION

Wind turbine blades are often formed using a closed mold process where a composite material is formed into shape between an inner mold and an outer mold. Often the composite material includes fiberglass matte material which is positioned between the inner mold and outer mold. Subsequently, resin material is introduced into the space between the inner and outer molds to infuse the fiberglass matte. In certain manufacturing processes two blade halves are independently formed and subsequently joined to form the complete blade. In one manufacturing process the entire blade is formed at once.

In order to make a blade outer mold, a slug is manufactured by, for example, a CNC machining process to match a desired final outer geometry of the blade. The outer mold is then formed from the slug as a negative of the blade outer geometry. Current wind turbine blades are as long as 75 meters, and longer blades are envisioned in the future. Consequently, manufacturing the slug and outer mold is an expensive and time consuming process.

The inner support structure within the blade is crucial to blade performance and is tied to the outer geometry of the blade. An inner mold, usually including at least two separate elements, is used in conjunction with the outer mold to compress the blade matrix material against the outer mold shape, and also to define the inner support structure within the blade. Each blade design is manufactured with a unique combination of an outer mold and an inner mold.

### BRIEF DESCRIPTION OF THE DRAWINGS

The invention is explained in the following description in view of the drawings that show:
FIG. 1 is a schematic representation of the two halves of an outer mold.
FIG. 2 is a schematic representation of the two halves of FIG. 1 assembled together.
FIG. 3 is a schematic representation of the assembled mold of FIG. 2 with a twist applied.
FIG. 4 is a schematic representation of an exemplary embodiment of an adjustment mechanism.
FIG. 5 is a schematic representation of an alternate exemplary embodiment of an adjustment mechanism.
FIG 6 is a schematic cross section of a wind turbine blade.
FIG. 7 is schematic cross section of a closed mold assembly with an inflexible inner mold.
FIG. 8 is schematic cross section of the closed mold assembly of FIG. 7 in a flexed position and with a second inflexible inner mold.
FIGS. 9-11 are schematic cross sections of an inner mold with a flexible bladder.
FIG. 12 is a schematic cross section of a closed mold assembly with an inner mold with a flexible bladder.
FIG. 13 is schematic cross section of the closed mold assembly of FIG. 12 in a flexed position with the same inner mold and flexible bladder.
FIG. 14 is a schematic cross section of the closed mold assembly of FIG. 12 in a flexed position with a different inner mold and flexible bladder.

### DETAILED DESCRIPTION OF THE INVENTION

The inventor has devised a mold assembly for a closed mold process where a single outer mold can be used to define more than one outer blade geometry. As a result, one outer mold can be formed from one slug, and the one outer mold can be used to form a variety of blades with differing outer geometries. In addition, the inner geometry of the blade can be changed as desired to accommodate whatever outer blade geometry is selected. By utilizing a single outer mold for more than one blade geometry, the present invention facilitates a reduction in the cost and time needed to produce a new blade design, and may be used to effectively correct a mold's geometric design post-production.

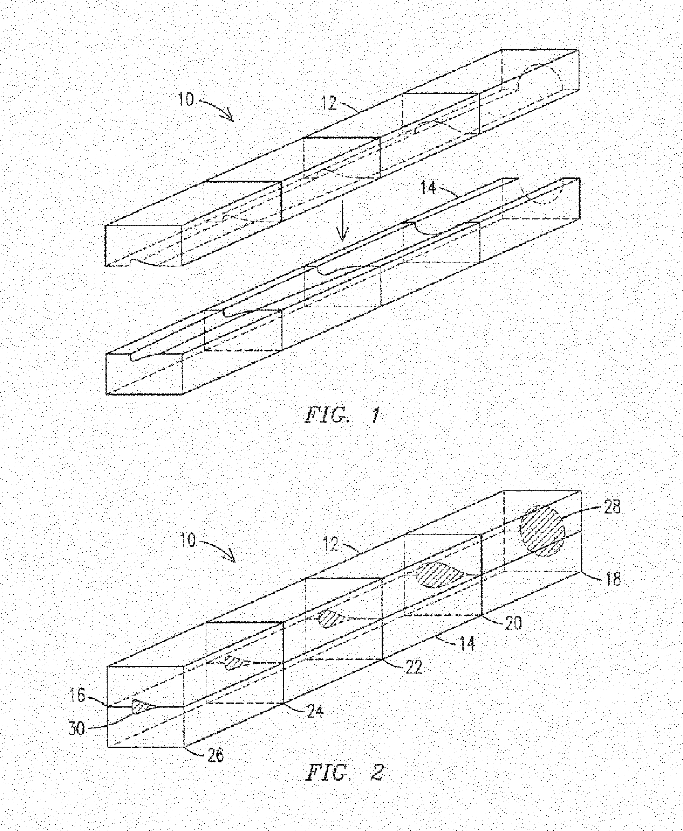

As shown in FIG. 1, an outer mold may 10 may include a first half 12 and a second half 14. In an exemplary embodiment shown in FIG. 2 the first half 12 and the second half 14 may be joined at a joint 16. Within the outer mold 10 an outer geometry is indicated in the various cross sections 18, 20, 22, 24, and 26. The cross sections 18, 20, 22, 24, and 26 show the blade may be round at a root 28 and vary in cross sectional size and shape along a length of the blade, eventually flattening and decreasing in cross sectional area toward the top 30 of the blade. Under the conventional manufacturing techniques, once the outer mold 10 is created, the outer geometry is constant from blade to blade. Examples of similar molding processes are described in US Patent No. 7,980,840 to Burchardt et al., and US Patent Application Publication Nos. US 2011/0210464 A1 to Burchardt et al., and US 2011/0233837 A1 to Schibsbye.

One critical aspect of a blade's outer geometry is a blade's twist. At each cross section of the blade wind impinges upon the cross section at a specific angle, known as the angle of attack. The aerodynamic design of a wind turbine blade is a summation of the effects of cross sectional aerodynamic forces. If, at any cross section, the angle of attack is off its design-point, the blade's performance suffers. It is also known that the aerodynamic forces encountered by the blade during operation of the turbine may deform the body of the blade. In recent years it has become apparent that a blade's deformation will include a twisting about the blades central axis. This twisting results in a new angle of attack at several spanwise (lengthwise) locations. This twisting effect is directly related to the nature of the internal structure of the blade. If the internal structure is weak, the blade may twist considerably. Consequently, the blade outer geometry may include a "pre-twist" to counter the operational twisting.

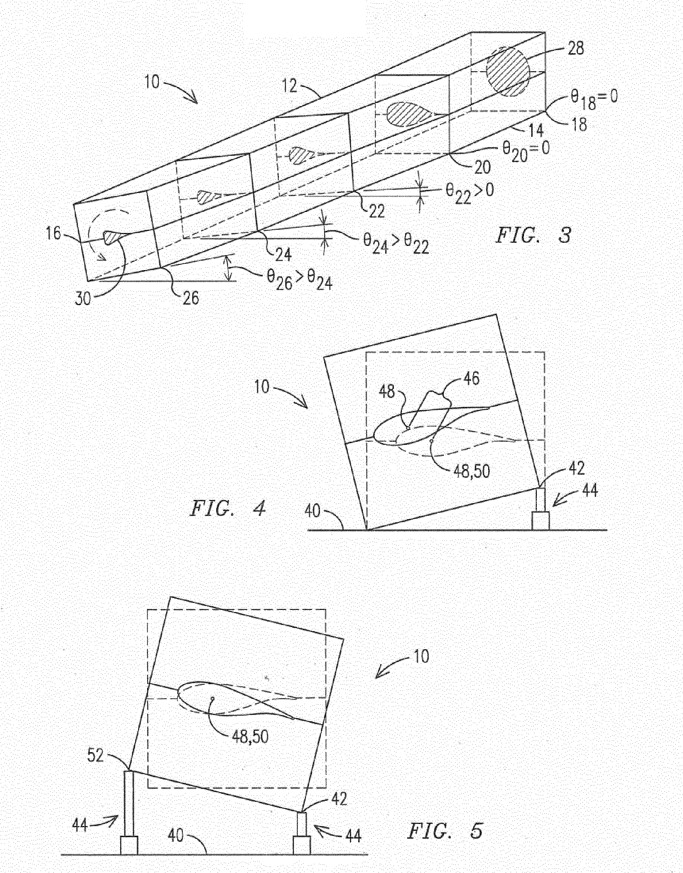

The mold assembly herein is configured to be flexible, and as a result, any degree of twist within structural limits can be applied to an outer mold. This allows for a basic blade geometry to be optimized for differing applications without requiring a new outer mold to be manufactured. FIG. 3 depicts a simple twist, where the blade undergoes a positive twist toward the tip 30. Cross sections 18 and 20 have θ18 and θ20 of zero, while cross sections 22-26 respective have θ22>0, θ24>θ22, and θ26>θ24, where θ is an angular deviation from an original design of the blade. The outer mold 10 may be in a neutral, unflexed state when defining an original outer design. Alternately, the outer mold may exhibit some flex when it defines the original outer design. The outer mold 10 may be elastic such that any induced flex is within its elastic range and it can return or be returned to an unflexed state or a state where it defines the original outer geometry. Alternatively, the outer mold 10 may be flexed outside its elastic range to define a second outer geometry such that force must be applied to return it to a position where it defines the original outer geometry.

The flex can be accomplished in any number of ways. In an exemplary embodiment, the outer mold 10 may rest on a surface 40, such as the ground, and a location 42 of the outer mold 10 may be raised, for example, by a height adjustment mechanism 44 such as a jack or equivalent. For example, but not meant to be limiting, gravity would hold much of the rest of the outer mold 10 in its original configuration, with a resilience of the mold inherently providing a gradual transition along the span from the lifted point to the part of the outer mold 10 on the ground. In this exemplary embodiment, portions of the outer mold 10 may be bolted to the ground while other portions are adjusted. Alternatively, the adjustment mechanism 44 may be used to define all positions in which the outer mold 10 may be used. In such instance, even when in a neutral, or unflexed position, the mold may rest on or be held in place by the adjustment mechanism 44.

If the inherent characteristics of the outer mold 10 did not supply the desired twist along the transition, then other height adjustment mechanisms 44 could be used to provide the proper spanwise twist profile, including the use of shims etc. This technique not only introduces twist to the blade, but as shown in FIG. 4, at any given cross section the longitudinal axis 48 may also translate a distance 46. Translation is the distance a longitudinal axis 48 of the blade is moved by the twisting from an original position 50. In certain instances one may wish to avoid translation, and so a height adjustment mechanism 44 such as that shown in FIG. 5 may be used. In this exemplary embodiment, when one location 42 is adjusted, another location 52 is also adjusted to compensate for the movement of the location 42 in order to keep the longitudinal axis 48 in its original position 50.

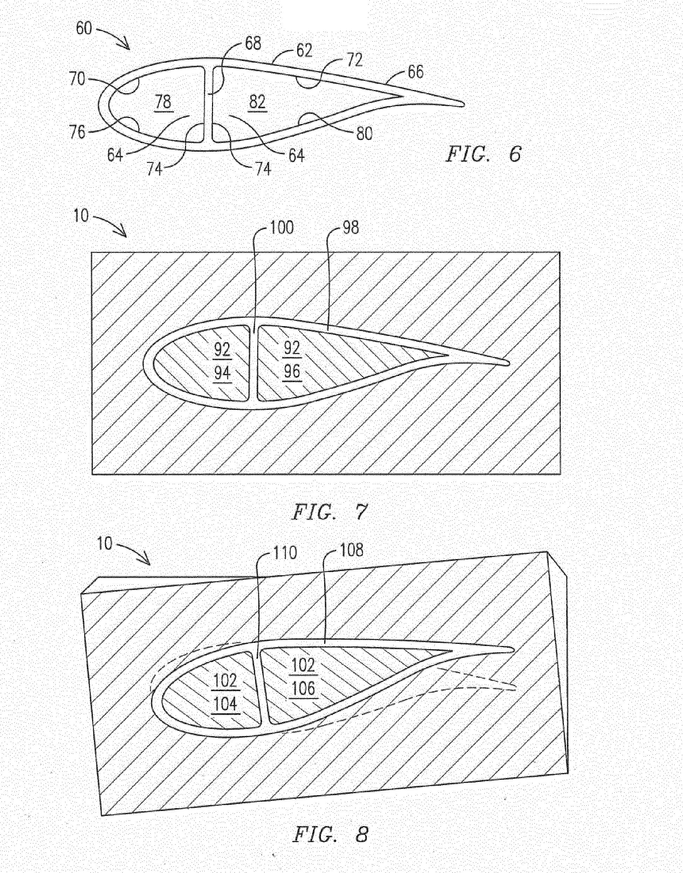

As can be seen in FIG. 6, each blade 60 is characterized not only by an outer geometry 62, but also characterized by an inner geometry 64. As used herein, an inner geometry 64 is a entire inner geometry as defined by inner surfaces of the blade, and this can be seen in cross section for any given location span wise of the blade. When the blade has no inner structure other than a skin 66, the inner geometry may simply be an inner surface of the skin. However, conventional wind turbine blades 60 include internal reinforcement 68 often referred to as a web. In such cases, the inner geometry 64 includes a leading skin inner surface 70, a trailing skin inner surface 72, and a web skin 74. The leading skin inner surface 70 and associated web skin 74 may be referred to as an inner skin 76 of a leading chamber 78. The trailing skin inner surface 72 and the web skin 74 may be referred to as an inner skin 80 of a trailing chamber 82. A change in the outer geometry almost always equates to a change in the inner geometry (so long as the blade thicknesses remain the same), because the inner surface of the airfoil surfaces will follow the outer geometry. However, a change in the inner geometry may be accomplished without changing the outer geometry. This is possible in particular when the internal reinforcing structure is changed but the outer geometry remains the same. For example, the web 68 may be repositioned within a given blade, and this would change the inner geometry but not the outer geometry.

The inner skins 76, 80 are formed by an inner mold. The inner mold may be an inflexible inner mold, or an inflexible mold-core with an associated compliant member such as an inflatable member, foam rubber etc. Alternately the entire inner mold may include only compliant members or inflatable bladders etc. FIG. 7 depicts an exemplary embodiment of a closed mold assembly 90 including an outer mold 10 with an original inflexible inner mold 92. The original inflexible inner mold 92 includes a leading chamber mold 94 and a trailing chamber mold 96. In the closed mold assembly 90, the blade 60 is formed in a skin space 98 between the inner mold 92 and the outer mold 10. A reinforcing structure may be formed at least in part in a reinforcing structure space 100 between the leading chamber mold 94 and the trailing chamber mold 96. The skin space 98 and the reinforcing structure space 100 of FIG. 7 define an original overall blade geometry, which includes the inner and outer blade geometries.

FIG. 8 shows the outer mold 10 of FIG. 7 which has been twisted to a new position. The original overall blade geometry of FIG. 7 is shown in FIG. 8 using dashed lines. Due to the twist, a different inflexible inner mold 102 is used, which includes a different leading chamber mold 104 and a different trailing chamber mold 106, which define a new skin space 108 and a new reinforcing structure space 110, which in turn define a second overall blade geometry that is different than the original overall blade geometry. The different inflexible inner mold 92, the new skin space 108, and the new reinforcing structure space 110 include the twist that the original inflexible inner mold did not. Consequently, an entirely different blade may be manufactured using the same outer mold 10.

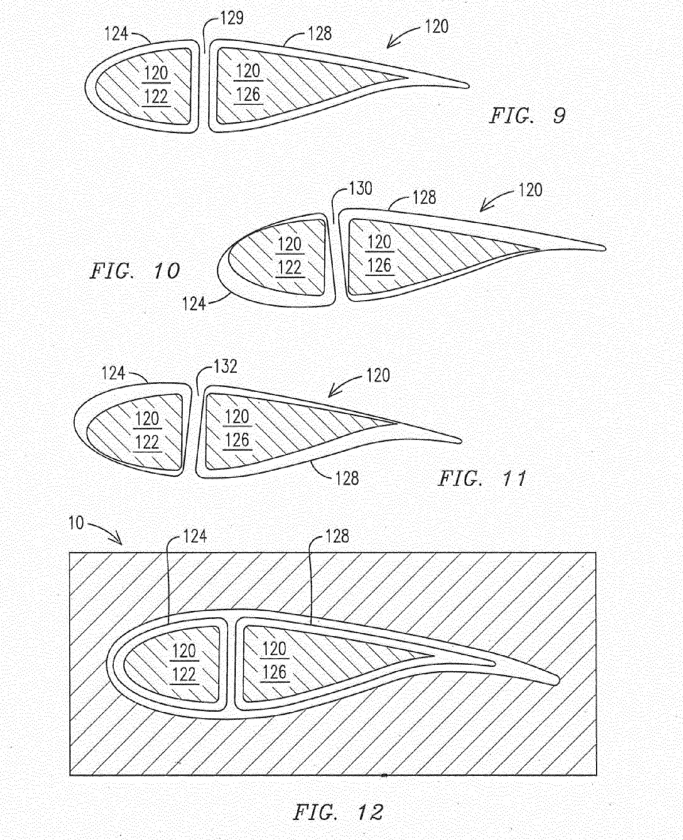

FIG. 9 depicts an exemplary embodiment of an inner mold arrangement 120 that includes a leading chamber mold-core 122 and an associated leading chamber compliant member such as inflatable bladder 124 shown expanded/inflated and in a neutral position. Also visible are a trailing chamber mold-core 126 and an associated trailing chamber inflatable bladder 128 shown inflated and in a neutral position. Together the leading chamber inflatable bladder 124 and the trailing chamber inflatable bladder 128 define a reinforcing structure space 129. When an inflatable bladder is used as part of the inner mold arrangement 120, the bladders may be inflated and the inflated bladders may define inner blade surfaces. The inflatable bladders will expand and conform to whatever surface they expand against. That surface may be reinforcing fibers that have been placed between in the skin space and reinforcing structure space, and these reinforcing fibers may or may not be accompanied by a blade core disposed, for example, between layers of reinforcing fibers.

FIG. 10 shows the inner mold arrangement 120 of FIG. 9 where a compliance of the leading chamber inflatable bladder 124 and the trailing chamber inflatable bladder 128 permit them to adjust to a first end of their range of positions. A first reinforcing structure space 130 formed when the leading chamber inflatable bladder 124 and the trailing chamber inflatable bladder 128 are at the first end of their range of positions is formed. FIG. 11 shows the inner mold arrangement 120 of FIG. 9 where a compliance of the leading chamber inflatable bladder 124 and the trailing chamber inflatable bladder 128 permit them to adjust to a second end of their range of positions. A second reinforcing structure space 132 formed when the leading chamber inflatable bladder 124 and the trailing chamber inflatable bladder 128 are at the second end of their range of positions is formed. The variations of the reinforcing structure spaces 130, 132, (which define part of the inner geometry) enabled by this compliance is evident when the positions of 130 and 132 are compared. From this it can be understood that when the inner mold uses inflatable bladders, a certain (relatively small) amount of twist of the outer mold can be accommodated by a single inner mold arrangement 120 that uses inflatable bladders. Stated another way, the compliant members of a single inner mold arrangement 120 will conform to a flex of the outer mold 10.

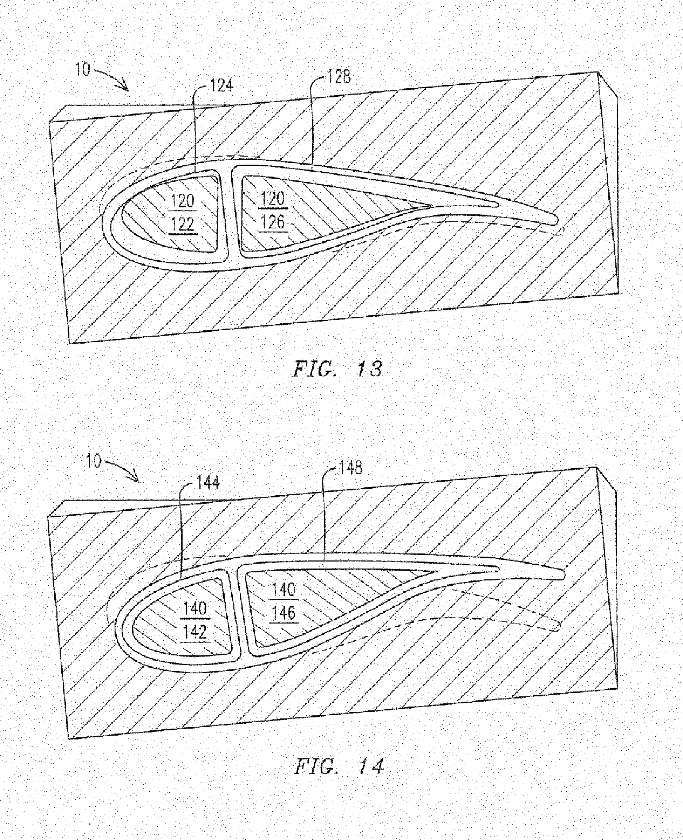

In an exemplary embodiment the outer mold 10 will have a range of twist that is greater than a range of compliance of the inner mold arrangement 120. As a result, the inner mold arrangement 120 will accommodate a portion of the range of twist (or flex of any kind) of the outer mold 10. In instances where the outer mold 10 is capable of being twisted more than a single inner mold arrangement 120 will accommodate, a second inner mold arrangement is used. This can be seen in FIGS. 12 and 13. In FIG. 12 the outer mold is in a configuration where it defines and original outer blade geometry. The leading chamber mold-core 122 and the trailing chamber mold-core 126 are shown inflated and in a neutral position, and therefore define an original inner geometry. In FIG 13 the outer mold 10 has been twisted from where it defined an original geometry (indicated by a dashed line) to where it defines a different geometry. The leading chamber mold-core 122 and the trailing chamber mold-core 126 are the same in both the original and the different geometries and have not moved, but it can be seen that the leading chamber inflatable bladder 124 and the trailing chamber inflatable bladder 128 have moved to the first end of their range of positions to accommodate the change in geometry in the outer mold 10. As a result of this, when minor changes in blade design are sought, a single outer mold 10 and a single inner mold arrangement 120 using inflatable bladders may suffice to create the new blade geometry.

When a more substantial change is sought, a single outer mold 10 may still be used and a second and different inner mold arrangement 140 may be used as shown in FIG. 14. In this exemplary embodiment, where the original geometry is indicated by a dashed line, the second inner mold arrangement 140 includes a second and different leading chamber mold-core 142, an associated second and different leading chamber inflatable bladder 144, a second and different trailing chamber mold-core 146 and an associated second and different trailing chamber inflatable bladder 148. Since the second and different inner mold arrangement 140 is being used, the associated inflatable bladders 144, 148 may be in a neutral position. In this manner the outer mold 10 may be flexed somewhat from the neutral position of the second inflatable inner bladders 144, 148. Alternatively, to form the second geometry the second inflatable inner bladders 144, 148 could be used at a second end of their range of positions. In this way the outer mold 10 could be used with two inner mold arrangements 120, 140, and each inner mold arrangement 120, 140 would be able to flex and therefore accommodate a portion of the range of positions of the outer mold 10. The respective ranges of positions of each inner mold arrangement 120, 140 could be designed such that they overlap each other, or are discrete, and thus their ranges together could take up a greater percentage of the range of positions of the outer mold 10. An assortment of inner mold arrangements could be designed such that their respective ranges of positions could accommodate the entire range of positions of the outer mold. In this way a set of inner mold arrangements could be designed to accommodate the entire range of positions of the outer mold. Once the set of inner mold arrangements is made, any blade geometry that the outer mold is capable of making could be accommodated by the set of inner mold arrangements, thereby eliminating any need to wait for a specific inner mold arrangement. In effect, the outer mold 10 together with the inner mold arrangement set would be a universal mold set capable of making any blade geometry within the entire range of positions of the outer mold.

The ability to adjust the outer geometry of a blade provides several advantages. As discussed above, one significant advantage is the ability to produce several different blade geometries from the same outer mold. This may enable optimizing blades of a certain general nature for specific site environments. In addition, advances in internal structural technology occur that may decrease the cost of assembling a blade, or improve productivity. These changes may directly impact the amount of twisting a blade will undergo during operation. In order to accommodate this effect, a re-zeroing of the twist distribution, for example back to the design point, may be necessary. The method disclosed will permit these improvements to the internal structural technology without requiring a new outer mold.

Another significant advantage of this method is that it will permit corrections to past designs, resulting from improvements to the design itself, or an improvement to the design and analysis techniques that result in new information coming to light that suggest or demand a new design. Still another advantage is that a portion of an existing mold may be reused when it matches a portion of a new mold in most aspects except the outer geometry (twist). For example, a section of the existing outer mold from the base to a mid section may be reused in conjunction with a new mid section-to-to mold, where the existing mold is flexed to the outer geometry requirements of the new design.

The innovative method and apparatus disclosed herein provides greatly increased flexibility in blade design and eliminates the need to produce a unique outer mold for each blade of a different outer geometry. Using one outer mold for various blades reduces the cost and time associated with creating new blades and allows for optimization of blades, thereby improving operational efficiency. For at least these reasons the method and arrangement disclosed herein represents an improvement in the art.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A closed mold arrangement for manufacturing a wind turbine blade, comprising:
a closed outer mold;
a mechanism to selectively flex the outer mold across a range of outer geometries; and
a first inner mold used in the closed outer mold when the closed outer mold is in a first outer geometry thereby defining a first blade geometry, and alternatively a second inner mold used in the closed outer mold when the closed outer mold is flexed to a second outer geometry different than the first outer geometry and thereby defining a second blade geometry.

2. The arrangement of claim 1, wherein the first inner mold comprises a first compliant member and wherein a compliance of the first compliant member allows the first inner mold to be used in the outer mold when the outer mold is flexed to a third outer geometry within a first range of outer geometries, thereby defining a third blade geometry.

3. The arrangement of claim 2, wherein the second inner mold comprises a second compliant member and wherein a compliance of the second compliant member allows the second inner mold to be used in the outer mold when the outer mold is flexed to a fourth outer geometry within a second range of outer geometries, thereby defining a fourth blade geometry.

4. The arrangement of claim 3, wherein the first and second ranges of outer geometries comprise at least one common outer geometry.

5. The arrangement of claim 1, wherein the mechanism is configured to flex the outer mold without translating a longitudinal axis of the outer mold.

6. A method for manufacturing a wind turbine blade using a closed mold arrangement, comprising:
manufacturing a first blade using a closed outer mold and a first inner mold with the outer mold positioned in a first position by a flexing mechanism;
wherein the closed outer mold is selectively positionable within a range of positions by the flexing mechanism.

7. The method of claim 6, wherein the first inner mold comprises a compliant member, the method further comprising manufacturing a second blade using the first inner mold and the outer mold positioned in a second position by the flexing mechanism.

8. The method of claim 6, further comprising manufacturing a second blade using a second inner mold and the outer mold positioned in a second position by the flexing mechanism.

9. The method of claim 6, further comprising manufacturing a second blade using a second inner mold and the outer mold positioned in the first position by the flexing mechanism.

10. The method of claim 6, further comprising manufacturing a second blade using the closed outer mold positioned in a second position by the flexing mechanism, wherein the first position and the second position are different along only a portion of a length of the blade.

11. The method of claim 10, wherein the second blade is made using a second inner mold different than the first inner mold.

12. The method of claim 10, wherein the first inner mold comprises a compliant member, and wherein the second blade is made using the first inner mold.

13. The method of claim 6, wherein when in the first position the closed outer mold defines a first outer geometry of the first blade, wherein the range of positions includes a second position that defines a second outer geometry that imparts a twist to the first outer geometry.

14. The method of claim 13, wherein the first and second outer geometries share a common longitudinal axis.

15. A method for manufacturing a wind turbine blade using a closed mold arrangement, comprising:
adjusting an outer mold from a first position defining a first outer geometry of a first blade to a second position defining a second outer geometry of a second blade; and
manufacturing the second blade.

16. The method of claim 15, further comprising manufacturing the first blade before adjusting the outer mold position.

17. The method of claim 15, further comprising using a flexing mechanism to adjust the outer mold.

18. The method of claim 15, further comprising using a first inner mold comprising a compliant member to define an inner geometry of the first blade and to define an inner geometry of the second blade.

19. The method of claim 15, further comprising using a first inner mold to define an inner geometry of the first blade, and using a second different inner mold to define an inner geometry of the second blade.

20. The method of claim 19, wherein the first and second inner molds comprise compliant members.
